# EUROPEAN PATENT APPLICATION

(11) **EP 2 407 854 A1**
(43) Date of publication of application: **18.01.2012**
(21) Application number: 10169214.3
(22) Date of filing: 12.07.2010
(51) Int. Cl.: G06F 1/26

(54) **Motherboard with energy saving function**

(71) Applicant: Giga-Byte Technology Co., Ltd., Taipei 231 (TW)
(72) Inventor: Lin, Hou-Yuan, Hsin Tien, Taipei County 231 (TW); Chen, Chen-Shun, Hsin Tien, Taipei County 231 (TW); Liao, Tse-Hsine, Hsin Tien, Taipei County 231 (TW)
(74) Representative: Schwerbrock, Florian

(57) **Abstract**

A motherboard with an energy saving function is coupled to an external power supply. The external power supply provides an operational power. The motherboard comprises a battery and a processing device. The battery provides a standby power. The processing device receives the operational power in a turned-on mode. The processing device does not receive the operational power and receives the standby power in a turned-off mode.

## Description

### BACKGROUND OF THE INVENTION

### Field of the Invention

The invention relates to a motherboard and more particularly to a motherboard with an energy saving function.

### Description of the Related Art

European union regulates that power consumption of a product must be less than a predetermined value. If the product conforms to European union regulations, the product is referred to as an Energy Using Product (EuP). The EuP is frequently misinterpreted as an energy saving instruction. In fact, the EuP is an eco-design instruction. The focus of the EuP is to reduce the environmental impact during the manufacturing phase.

When a designer designs a product, routine factors and ecological factors must be considered according to the regulation of the EuP. The routine factors comprise functions, performances, materials, structures, appearances, commonality, security, package, cost, standards and certification. When a product is manufactured, the energy source, environment and natural resources are affected by the manufacturing procedures of the product. The affected degrees serve as the ecological factors.

### BRIEF SUMMARY OF THE INVENTION

In accordance with an embodiment, a motherboard with an energy saving function is coupled to an external power supply. The external power supply provides an operational power. The motherboard comprises a battery and a processing device. The battery provides a standby power. The processing device receives the operational power in a turned-on mode. The processing device does not receive the operational power and receives the standby power in a turned-off mode.

A detailed description is given in the following embodiments with reference to the accompanying drawings.

### BRIEF DESCRIPTION OF THE DRAWINGS

The invention can be more fully understood by referring to the following detailed description and examples with references made to the accompanying drawings, wherein:

FIG. 1 is a schematic diagram of an exemplary embodiment of an operation system;

FIG. 2 is a schematic diagram of an exemplary embodiment of the processing device; and

FIG. 3 is a schematic diagram of another exemplary embodiment of the operation system.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

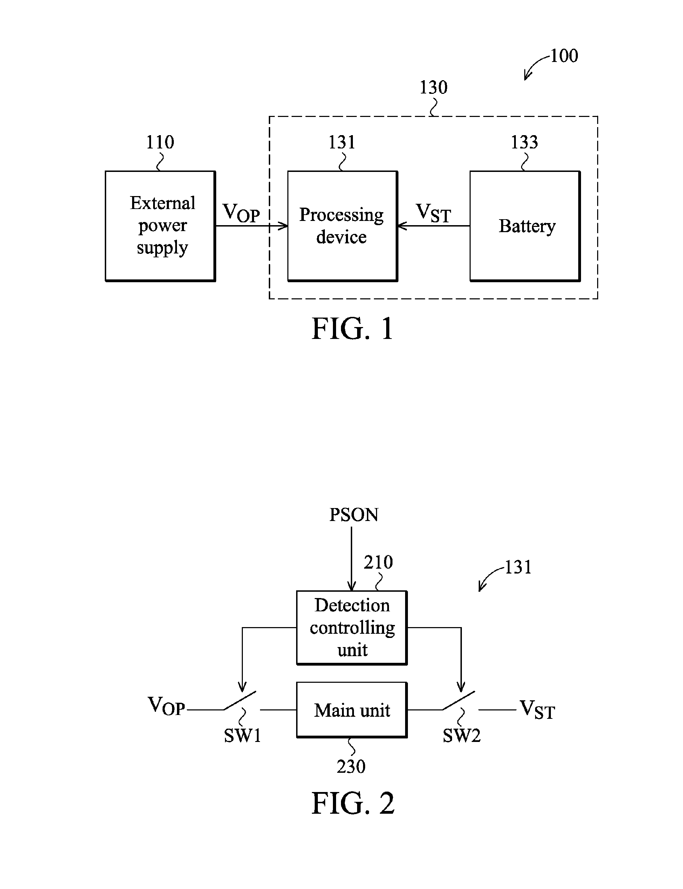

FIG. 1 is a schematic diagram of an exemplary embodiment of an operation system. The operation system 100 comprises an external power supply 110 and a motherboard 130. The external power supply 110 is disposed out the motherboard 130 and provides an operational power V_{OP} to the motherboard 130. In this embodiment, the motherboard 130 is an energy using product (EUP) and has an energy saving function. The motherboard 130 comprises a processing device 131 and a battery 133.

The conventional functions and structures of the motherboard 130 are well known to those skilled in the field such that FIG. 1 does not show the conventional structures, and the conventional descriptions of the motherboard are omitted for brevity. In addition, the invention does not limit the structure of the processing device 131. Any electronic device can serve as the processing device 131 if the electronic devices can receive the operational power V_{OP} generated by the external power supply and can receive a standby power V_{ST} provided by the battery 133.

When the operation system 100 is in a turned-on mode, the processing device 131 receives the operational power V_{OP} provided by the external power supply 110. When the operation system 100 is in a turned-off mode, the processing device 131 does not receive the operational power V_{OP} and receives the standby power V_{ST} provided by the battery 133.

In the turned-on mode, since the motherboard 130 does not receive the operational power V_{OP} provided by the external power supply 110, AC consumption of the operation system 100 is approximately 0W. Thus, the operation system 100 achieves the energy saving function. Additionally, the AC consumption of the motherboard 130 is less than 1W. Therefore, the motherboard 130 serves as an EUP defined by the European union.

In other embodiments, when the operation system 100 enters S3 mode (i.e. a standby mode or a dormant mode), the processing device 131 does not receive the operational power V_{OP} and receives the standby power V_{ST} provided by the battery 133 to avoid the AC consumption.

The invention does not limit the type of the battery 133. The battery 133 can be an alkaline battery or a rechargeable battery. For example, assuming the battery 133 is a rechargeable battery, although the processing device 133 receives the power of the rechargeable battery in the turned-off mode, the processing device 133 charges the rechargeable battery in the turned-on mode. Therefore, the power of the rechargeable battery is sustained and maintained.

In the turned-on or the turned-off mode, the processing device 131 detects whether a specific condition is occurring. When the specific condition is occurring, the processing device 131 executes a predetermined action. In one embodiment, the specific condition is that the processing device 131 receives an activating signal issued by an external device, such as a mouse, a keyboard, an internet.

Assuming the operation system 100 is a computer with an encryption function. When receiving a correct password, the operation system 100 executes a turn-on action. In this case, the specific condition is that the correct password is input and the predetermined action is to turn-on the operation system 100. A user utilizes a keyboard or a mouse to input the correct password. Since the processing device 131 receives the standby power V_{ST} in the turned-off mode, the processing device 131 (e.g. a keyboard controller) can detect whether a correct password is input. If the input password is correct, the processing device 131 does not receive the standby power V_{ST} and again receives the operational power V_{OP} such that the turned-on mode is again entered.

In another embodiment, the processing device 131 is a storage unit. The invention does not limit the type of the storage unit. In some embodiments, the storage unit is a Double Data Rate Synchronous Dynamic Random Access Memory (DDR SRAM), a flash or hard disk. When the operation system 100 is in a standby mode, since the storage unit receives the standby power V_{ST}, data stored in the storage unit can be maintained.

In other embodiments, the processing unit 131 can be a detector to detect whether an activating signal is issued. The activating signal is issued by a remote control device. In this case, the processing device 131 receives power in the turned-off mode such that the processing device 131 is capable of detecting whether an activating signal is issued by a remote control device. The processing device 131 executes a predetermined action (e.g. turning on the operation system) according to the received activating signal.

Assuming the motherboard 130 connects to a remote control device via a network line. When the remote control device issues an activating signal (e.g. a turn-on signal), since the processing device 131 receives the standby power V_{ST} in the turned-off mode or in a standby mode, the operation system 100 can be switched to enter a turned-on mode from a turned-off mode.

In another embodiment, the processing device 131 receives the operational power V_{OP} or the standby power V_{ST} according to a power on signal (PSON) received by a central processing unit (CPU). For example, when the CPU receives the power on signal, the processing device 131 only receives the operational power V_{OP}. When the CPU does not receive the power on signal, the processing device 131 only receives the standby power V_{ST}.

FIG. 2 is a schematic diagram of an exemplary embodiment of the processing device. In this embodiment, the processing device 131 comprises switches SW1 and SW2, a control unit 210 and a main unit 230. The switch SW1 is coupled between the external power supply 110 and the main unit 230. When the switch SW1 is turned on, the operational power V_{OP} is transmitted to the main unit 230.

The switch SW2 is coupled between the main unit 230 and the battery 133. When the switch SW2 is turned on, the standby power V_{ST} is transmitted to the main unit 230. The invention does not limit the kind of the main unit 230. In some embodiment, the main unit 230 is a keyboard controller, DDRSRAM or other electronic devices, which need a standby power.

In this embodiment, the processing device 131 comprises a detection controlling unit 210. The detection controlling unit 210 determines whether to turn on or off the switches SW1 and SW2 according to an activating signal (i.e. PSON). The invention does not limit the kind of the activating signal. Any signal can serve as the activating signal if the signals relate to a turned-on action or a turned-off action of the operation system 100.

For example, when the detection controlling unit 210 detects the signal PSON, the switch SW1 is turned on and the switch SW2 is turned off. Thus, the main unit 230 receives the operational power V_{OP.} In this embodiment, the motherboard 130 executes a turning-on action and the operation system enters a turned-on mode because the signal PSON is issued. If the signal PSON is not detected by the detection controlling unit 210, the switch SW1 is turned off and the switch SW2 is turned on. Thus, the main unit 230 receives the standby power V_{ST}. In this embodiment, the motherboard 130 enters a turned-off mode or a standby mode because the signal PSON is not issued.

In another embodiment, a Basic Input/Output System (BIOS) is utilized to turn on or off the switches SW1 and SW2. In this case, a user decides whether to activate an energy saving function of the BIOS. If the energy saving function is activated, the switch SW1 is turned off and the switch SW2 is turned on in the turned-off mode. Thus, the main unit 230 receives the standby power V_{ST} such that the AC consumption of the operation system 100 is reduced.

The invention does not limit the method of activating the energy saving function. In other embodiment, a switch is disposed in the case of the operation system 100. A user turns the switch on or off to determine whether to activate the energy saving function. When the switch is turned on, the energy saving function is activated.

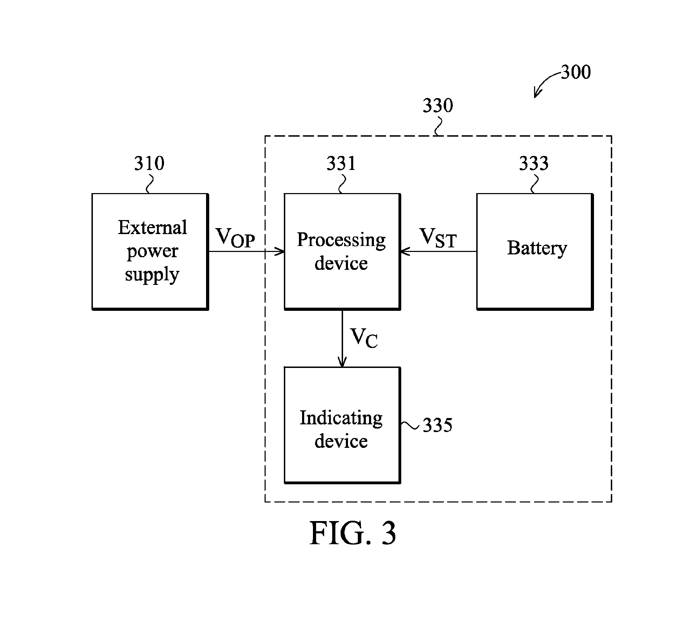

FIG. 3 is a schematic diagram of another exemplary embodiment of the operation system. FIG. 3 is similar to FIG. 1 except for the addition of an indicating device 335. In this embodiment, the processing device 331 provides a control signal V_{C} according to the usage state of the battery 333. The indicating device 335 is controlled by the control signal V_{C}. A user can obtain the usage state of the battery 333 according to the indicating device 335.

The invention does not limit the kind of the indicating device 335. Any devices are capable of serving the indicating device 335 when the devices are capable of noticing the usage state of the battery 333. For example, the indicating device 335 comprises at least one light-emitting diode (LED) in one embodiment. The different colors of light emitted by the LED indicate the different usage state of the battery 333. In one embodiment, the LED can emit a red light, a green light or a blue light. In another embodiment, the indicating device 335 is a display panel. The display panel shows a notice which provides the user with information pertaining to the condition of the battery 333. The notice information indicates that the battery 333 is charged or not charged, or experiencing failure.

In the above embodiments, the indicating device 335 utilizes a visual method (e.g. emitting light or display image) to indicate the usage state of the battery 333. In other embodiments, the indicating device 335 utilizes a voice method to indicate the usage state of the battery 333. For example, when the battery 335 has a failure, the indicating device 335 sends a warning voice to immediately warn the user.

While the invention has been described by way of example and in terms of the preferred embodiments, it is to be understood that the invention is not limited to the disclosed embodiments. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A motherboard with an energy saving function and coupled to an external power supply providing an operational power, comprising:
a battery providing a standby power; and
a processing device receiving the operational power in a turned-on mode, wherein the processing device does not receive the operational power and receives the standby power in a turned-off mode.

2. The motherboard as claimed in claim 1, wherein the processing device charges the battery in the turned-on mode.

3. The motherboard as claimed in claim 1, wherein the processing device detects whether a specific condition occurs in the turned-off mode, and when the specific condition occurs, the processing device executes a predetermined action.

4. The motherboard as claimed in claim 3, wherein the specific condition is that the processing device receives an activating signal issued by an external device.

5. The motherboard as claimed in claim 4, wherein the processing device again receives the operational power and does not receive the standby power to again enter the turned-on mode according to the activating signal.

6. The motherboard as claimed in claim 4, wherein the external device is a mouse, a keyboard or an internet.

7. The motherboard as claimed in claim 1, wherein the processing device determines whether to receive the operational power or receive the standby power according to a power on signal.

8. The motherboard as claimed in claim 1, wherein the processing device does not receive the operational power and receives the standby power in a standby mode.

9. The motherboard as claimed in claim 1, further comprising:
a main unit receiving the operational power or the standby power;
a first switch coupled between the external power supply and the main unit; and
a second switch coupled between the main unit and the battery, wherein the first switch is turned on and the second switch is turned off in the turned-on mode and the first switch is turned off and the second switch is turned off in the turned-off mode.

10. The motherboard as claimed in claim 9, further comprising:
a control unit which determines whether to turn on or off the first and the second switches according to an activating signal.

11. The motherboard as claimed in claim 9, further comprising:
a base input output signal (BIOS) turning on or off the first and the second switches.

12. The motherboard as claimed in claim 1, further comprising:
an indicating device indicating the usage state of the battery according to a control signal provided by the processing device.
